Europäisches Patentamt

European Patent Office

Office européen des brevets

(19)

(11) Veröffentlichungsnummer: **0 609 743 B1**

(12) **EUROPÄISCHE PATENTSCHRIFT**

(45) Veröffentlichungstag der Patentschrift: **13.12.95**

(51) Int. Cl.6: **B23H 9/12**, B23H 9/00, F01D 25/24

(21) Anmeldenummer: **94100965.6**

(22) Anmeldetag: **24.01.94**

(54) **Verfahren zur Herstellung einer Teilfuge im Turbinenbau**

(30) Priorität: **30.01.93 DE 4302633**

(43) Veröffentlichungstag der Anmeldung:
**10.08.94 Patentblatt 94/32**

(45) Bekanntmachung des Hinweises auf die Patenterteilung:
**13.12.95 Patentblatt 95/50**

(84) Benannte Vertragsstaaten:
**AT DE FR GB IT**

(56) Entgegenhaltungen:
**DE-A- 3 111 306**
**DE-B- 1 219 042**
**FR-A- 2 664 520**

(73) Patentinhaber: **ABB PATENT GmbH**
**Kallstadter Strasse 1**
**D-68309 Mannheim (DE)**

(72) Erfinder: **Flöser, Bernhard**
**Gudrunstrasse 6**
**D-90530 Wendelstein (DE)**

(74) Vertreter: **Rupprecht, Klaus, Dipl.-Ing. et al**
**c/o ABB Patent GmbH,**
**Postfach 10 03 51**
**D-68128 Mannheim (DE)**

Rank Xerox (UK) Business Services
(3. 10/3.0 9/3.3.3)

## Beschreibung

Die Erfindung betrifft ein Verfahren nach dem Oberbegriff des Anspruches 1.

Der Rotor einer Turbine wird von verschiedenen Baueinheiten radial umschlossen. Zur Montage dieser Baueinheit ist es erforderlich, daß sie aus zwei axial geteilten Hälften bestehen, die über dem Rotor zusammengesetzt werden können. Bei manchen dieser Baueinheiten, so z. B. bei den mit Düsen versehenen Zwischenböden, ist es zweckmäßig, die Baueinheit zunächst als geschlossenen Ring weitgehend fertig bearbeitet herzustellen und anschließend in zwei Hälften zu teilen. Hierzu trennt man die Zwischenböden durch eine Säge in ein Ober- und Unterteil. Man ist bemüht den Sägeschnitt genau entlang einer mittleren Trennungsebene zu führen, um Nacharbeiten, wie das Dichtschleifen der Teilfuge, möglichst zu reduzieren. Nicht vermeidbar ist jedoch, daß es durch die spanabhebende Wirkungsweise des Sägeblatts zu einem seiner Dicke entsprechenden Materialabtrag kommt. Die hierdurch entstehende, relativ breite Teilfuge muß durch Aufschweißen oder Beilegen von Beilagestücken ausgeglichen werden, um Unrundheiten besonders im Bereich der Düsen zu vermeiden. Außerdem wird noch ein als Paßfeder bezeichneter Keil in die Teilfuge eingelegt, für den zwei Nuten im Ober- und Unterteil einzufräsen sind.

Aufgabe der Erfindung ist es, ein Verfahren nach dem Oberbegriff des Anspruches 1 so zu verbessern, daß die vorstehend beschriebenen, aufwendigen, mit hohen Durchlaufzeiten verbundenen Arbeitsgänge vereinfacht und beschleunigt werden und gleichzeitig eine Teilfuge mit besonders guter Dichtwirkung erreicht wird.

Diese Aufgabe wird durch die im Anspruch 1 aufgeführten Merkmale gelöst. Zweckmäßige Ausgestaltungen und Weiterbildungen des Erfindungsgegenstandes sind in den Unteransprüchen genannt.

Durch das Herstellen der Teilfuge mit Hilfe einer Drahterosion gelingt es einen sehr sauberen Schnitt mit einer sehr schmalen Teilfuge herzustellen. Die Breite der Teilfuge liegt in der Größenordnung von einem Millimeter, so daß der beim Zusammenfügen von Ober- und Unterteil wirksam werdende Materialverlust und die sich daraus ergebende Unrundheit vernachlässigbar sind. Durch ein gezieltes Abweichen der Schnittlinie von einer durch die Trennungsebene gebildeten Geraden wird eine Zentrierung von Ober- und Unterteil für die nachfolgende Fertigbearbeitung der zusammengesetzten Baueinheit erreicht. Außerdem wird die Voraussetzung dafür geschaffen, daß bestimmte kritische Teile, wie z. B. Düsenschaufeln durch die Schnittlinie umgangen werden können.

Eine zweckmäßige Weiterbildung des Erfindungsgegenstandes sieht vor, die Schnittlinie unter einem vorgegebenen ersten Winkel von der Trennungsebene geradlinig wegzuführen und unter einem vorgegebenen zweiten Winkel geradlinig zur Trennungsebene zurückzuführen. Hierdurch ergibt sich eine Teilfuge mit definierten Fugenbreiten, wobei die Breite der einzelnen Teilstücke der Teilfuge so festgelegt werden müssen, daß ein weitgehend spaltfreies Zusammenfügen von Ober- und Unterteil ermöglicht wird.

Vorteilhaft ist es, wenn der Verlauf der Schnittlinie in ihrem Profil einem Zahn entspricht, mit der Form eines Sägezahns oder eines Trapezes und bei mehreren Zähnen die Trennungsebene eine Mittellinie für mindestens einen dieser Zähne bildet.

Besonders zweckmäßig ist es, wenn zwei Teilstücke einer Teilfuge, von denen eines von der Trennungsebene wegläuft und das andere zu ihr zurückkehrt, miteinander einen Winkel einschließen, der durch ein auf die Trennungsebene gerichtetes Lot halbiert wird. In diesem Fall besitzen die beiden Teilstücke der Teilfuge in Bezug auf die Trennungsebene die gleiche Steigung und damit die gleiche Breite, die vorzugsweise mit dem Durchmesser des Erodierdrahtes übereinstimmt.

Damit sich das Schneiden der Teilfuge mit Hilfe des Erodierdrahtes nicht verzögert, sollte ein möglichst großer Teil der Schnittlinie ohne Umkehren oder zusätzliche Wege des Erodierdrahtes zurückgelegt werden können. Bei einem Sägezahnschnitt mit gleichem Flankenwinkel, bezogen auf die Trennungsebene, wird dieses Ziel weitgehend erreicht. Im Wendebereich des Erodierdrahtes entstehen jedoch Spitzen, die abgerundet werden müssen, damit die dabei entstehenden konvexen Rundungen beim Zusammenfügen von Ober- und Unterteil formschlüssig in die zugehörigen konkaven Rundungen passen. Dabei wird man darauf achten, daß zum paßgerechten Fügen alle Rundungen etwa der Rundung des Erodierdrahtes entsprechen. Um eine ausreichend schmale Teilfuge zu erreichen, ist es zweckmäßig mit einem Erodierdraht zu arbeiten, dessen Durchmesser kleiner als 0,5 mm ist.

Wie schon angedeutet, ist es möglich, die Schnittlinie so zu führen, daß kritische Teile wie z.B. Düsenschaufeln nicht zerschnitten werden. Um bei einer solchen Umgehung dennoch einen Sägezahnschnitt beibehalten zu können, wird mit unterschiedlichen Flankenlängen, aber in Bezug zur Trennungsebene gleichen Flankenwinkeln, gearbeitet.

Bei einem Übergang der Schnittlinie vom Flankenbereich z. B. eines Sägezahnprofils in einen zur Trennungsebene parallellaufenden Bereich, muß die Breite der Teilfuge jeweils so dimensioniert werden, daß ein spaltfreies Zusammenfügen von Ober- und Unterteil ermöglicht wird. Hierzu muß die Teilfuge in ihrem zur Trennungsebene parallel liegenden Bereich um einen Wert x breiter als der Durchmesser des Erodierdrahtes gestaltet werden, sofern die Teilfuge im Flankenbereich der Zahnprofile bezüglich ihrer Breite mit dem Durchmesser des Erodierdrahtes übereinstimmt.

Eine wesentliche Verbesserung läßt sich dadurch erreichen, daß der Erodierdraht während des Schnittes nicht parallel, sondern in einem vorgegebenen Führungswinkel von vorzugsweise kleiner 90° zur Mittelachse der zu trennenden Baueinheit geführt wird. Hierdurch wird nach dem anschließenden Zusammenfügen der beiden Hälften die geteilte Baueinheit ein höherer mechanischer Zusammenhalt gegenüber einem Verschieben der beiden Hälften zueinander erzielt. Besonders günstig ist es, wenn ein der Hirthverzahnung ähnlicher Schnittverlauf erzeugt wird, was dadurch erreichbar ist, daß der Führungswinkel des Erodierdrahtes durch dessen Schwenken, vorzugsweise 180°, nach dem Durchtrennen des ersten, vor der Mittelachse liegenden Teils der Baueinheit verändert wird und erst dann der auf der anderen Seite der Mittelachse liegende Teil der Baueinheit ebenfalls getrennt wird.

Ein Ausführungsbeispiel der Erfindung ist in den Zeichnungen dargestellt und wird im folgenden näher beschrieben. Es zeigen:

Fig. 1    einen Ausschnitt aus einer Teilfuge seitlich im Schnitt gesehen mit einem Sägezahnprofil,

Fig. 2    einen Ausschnitt aus einer Teilfuge mit einem Sägezahn, dessen eine Flanke in einen zur Trennungsebene parallelliegenden Teil ausläuft, seitlich im Schnitt gesehen,

Fig. 3    den Verlauf einer Teilfuge im Bereich der Trennungsebene bei einem Zwischenboden.

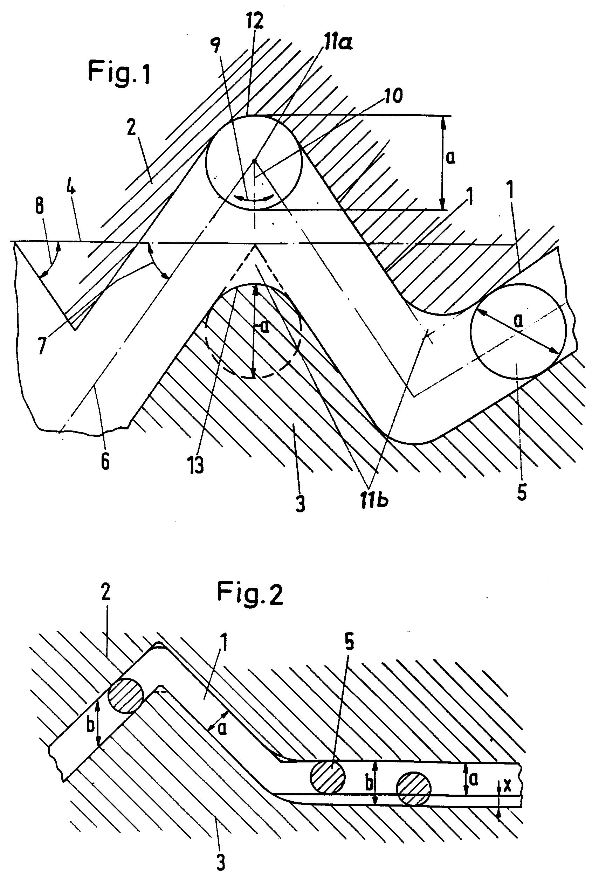

Wie Figur 1 erkennen läßt, wird mit Hilfe eines Erodierdrahtes 5 eine zu einer Turbine gehörige Baueinheit in ein Oberteil 2 und ein Unterteil 3 getrennt. Der Erodierdraht 5 wird hierzu entlang einer Schnittlinie 6 so geführt, daß sich ein Sägezahnprofil ergibt, das in seiner Grundrichtung entlang einer Trennungsebene 4 verläuft. Sorgt man dafür, daß die von den beiden Flanken eines Sägezahns mit der Trennungsebene 4 gebildeten ersten und zweiten Winkel 7, 8 gleich sind, dann wird auch ein dritter Winkel 9 durch ein auf die Trennungsebene gefälltes Lot 10 halbiert und damit sichergestellt, daß die Teilfuge 1 im Bereich beider Flanken gleich breit ist. Ihre Breite entspricht dabei dem Durchmesser a des Erodierdrahtes 5. Im Wendebereich des Erodierdrahtes verbleibende Sägezahnspitzen 11a, 11b müssen abgerundet werden, damit beim Zusammenfügen von Oberteil 2 und Unterteil 3 weder Spalte noch Lücken entstehen. Bei der Spitze 11a ergibt sich eine dem Durchmesser des jeweiligen Erodierdrahtes 5 entsprechende konkave Rundung 12, während bei der Spitze 11b durch entsprechende Führung des Erodierdrahtes 5 dafür gesorgt werden muß, daß sich eine für das Zusammenfügen geeignete konvexe Rundung 13 ergibt, die wiederum etwa einen Durchmesser a besitzt.

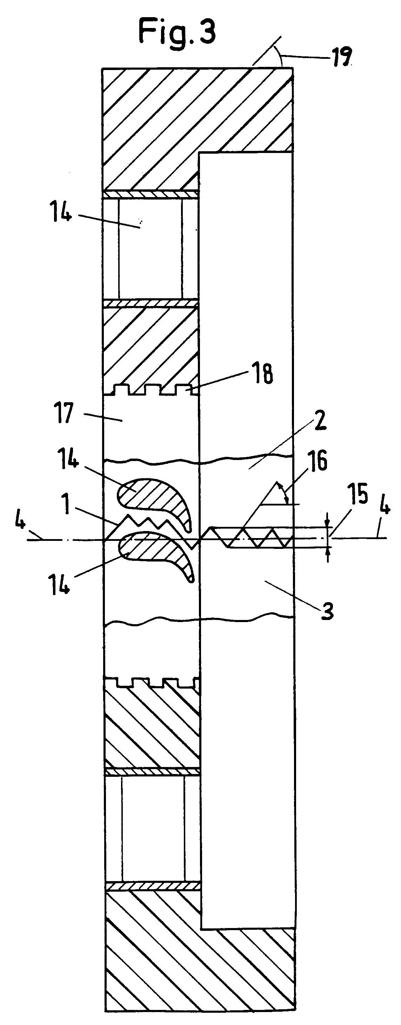

In Figur 2 ist eine sägezahnförmige Teilfuge 1 dargestellt, die in ein geradliniges, parallel zur Trennungsebene liegendes Teilstück übergeht. Während die Teilfuge 1 im Flankenbereich des Sägezahns eine dem Durchmesser a des Erodierdrahtes 5 entsprechende Breite besitzt, erhöht sich ihre Breite um den Wert x auf b gleich a + x im geraden, parallel zur Trennungsebene liegenden Teil. Die Strecke b muß beim Zusammenfügen des Oberteils 2 und des Unterteils 3 nach erfolgtem Trennungsschnitt zurückgelegt werden, damit die Flächen des Oberteils spaltfrei auf den Flächen des Unterteils zu liegen kommen. Um eine Teilfuge 1 mit der Breite b zu erhalten, muß der Erodierdraht 5 entlang einer zweiten Schnittlinie geführt werden.

Figur 3 zeigt den Verlauf einer Trennfuge 1 an einem Zwischenboden, wobei die Trennfuge 1 im Bereich von Düsenschaufeln 14 so geführt ist, daß letztere vom Schnitt nicht erfaßt werden, auch wenn die eigentliche Trennungsebene durch sie hindurch verläuft. Hierbei ist allerdings zu berücksichtigen, daß unter Trennungsebene eine geradlinig verlaufende idealisierte Schnittfläche verstanden wird, die durch den wirklichen Verlauf nur grundätzlich angenähert wird.

Bemerkenswert ist der Verlauf der Teilfuge 1 im Bereich zwischen den Düsenschaufeln 14. Hier wurde dafür gesorgt, daß die Sägezähne im Umgehungsbereich trotz unterschiedlicher Flankenlänge 15 gleiche Flankenwinkel 16 erhalten.

Weiterhin sind zwei um 180° gedrehte Ansichten des Zwischenbodens zu erkennen. Die erste Ansicht in der Bildmitte zeigt zwei Düsenschaufeln im Querschnitt. Hier fällt die Trennungsebene 4 mit der Mittelachse des Zwischenbodens zusammen. Beim oberen und unteren Teil der gleichen Zeichnung ist je eine Düsenschaufel 14 seitlich mit Blick auf die Trennungsebene 4 zu sehen. Dabei erkennt man den Sägezahnschnitt in der Trennungsebene, der in den Wendepunkten schräg verlaufende Linien ergibt, die nicht mit der Schraffur eines im Schnitt dargestellten Teils verwechselt werden sollten. Die schrägen Linien des Sägezahnschnitts verlaufen unter einem Führungswinkel 19 zur Mittelachse, wobei sich ihre Richtung oberhalb der Mittellinie von der Richtung unterhalb der Mittellinie gewollt unterscheidet, um eine Art Hirthverzahnung zu erhalten, die eine erhöhte Widerstandsfähigkeit des zusammengefügten Bauteils gegenüber einer gegenseitigen Verschiebung seiner beiden Hälften bewirkt. Weiterhin sind noch Kämme einer Wellendichtung 18 dargestellt, die bei einem in einem Rotorloch 17 eingesetzten Rotor für eine ausreichende Dichtung zwischen diesem und dem Zwischenboden sorgen.

## Patentansprüche

1. Verfahren zur Herstellung einer Teilfuge (1) in einem Turbinenbauteil, insbesondere einem Zwischenboden, das zum Einbau in eine Turbine zunächst entlang einer - vorzugsweise mittleren - Trennungsebene in ein Ober- und ein Unterteil (2, 3) getrennt und nach erfolgtem Einbau wieder zu einer geschlossenen Baueinheit zusammengesetzt wird, **dadurch gekennzeichnet,** daß die Teilfuge (1) durch Drahterosion hergestellt wird und die in ihrer Grundrichtung entlang der Trennungsebene (4) oder parallel hierzu verlaufende Schnittlinie (6) eines Erodierdrahtes (5) sich mindestens einmal von der Trennungsebene (4) gezielt entfernt und dann wieder gezielt auf diese zuläuft.

2. Verfahren nach Anspruch 1, dadurch gekennzeichnet, daß sich die Schnittlinie (6) unter einem vorgegebenen ersten Winkel (7) von der Trennungsebene geradlinig entfernt und unter einem vorgegebenen zweiten Winkel (8) geradlinig zur Trennungsebene (4) zurückkehrt.

3. Verfahren nach einem der vorhergehenden Ansprüche, dadurch gekennzeichnet, daß der Verlauf der Schnittlinie (6) in ihrem Profil einem Zahn, ähnlich einem Sägezahn oder einem Trapez entspricht und die Trennungsebene (4) eine Mittellinie durch mindestens einen dieser Zähne bildet.

4. Verfahren nach einem der vorhergehenden Ansprüche, dadurch gekennzeichnet, daß zwei entsprechend den Schenkeln eines Dreiecks oder Trapezes außerhalb der Trennungsebene (4) von dieser weg- und zu ihr zurücklaufende Schnittlinien (6) einen dritten Winkel (9) einschließen, der durch ein Lot (10) zur Trennungsebene halbiert wird.

5. Verfahren nach einem der vorhergehenden Ansprüche, dadurch gekennzeichnet, daß die Spitzen (11a, 11b) der durch die Schnittlinie (6) gebildeten Zähne so abgerundet werden, daß entstehende konvexe Rundungen (13) beim Zusammenfügen von Ober- und Unterteil (2, 3) formschlüssig in zugehörige konkave Rundungen (12) passen.

6. Verfahren nach Anspruch 5, dadurch gekennzeichnet, daß alle Rundungen (12, 13) einen Durchmesser erhalten, der dem Durchmesser des Erodierdrahtes (5) entspricht.

7. Verfahren nach einem der vorhergehenden Ansprüche, dadurch gekennzeichnet, daß mit einem Erodierdraht (5) gearbeitet wird, der einen Durchmesser kleiner als 0,5 mm, vorzugsweise 0,3 mm, besitzt.

8. Verfahren nach einem der vorhergehenden Ansprüche, dadurch gekennzeichnet, daß die Schnittlinie (6) so geführt ist, daß in der Trennungsebene (4) liegende kritische Teile (14), insbesondere Düsenschaufeln, umgangen werden.

9. Verfahren nach Anspruch 8, dadurch gekennzeichnet, daß zur Umgehung der kritischen Teile (14) durch die Schnittlinie (6) ein Zahnprofil mit auf- und absteigenden Flanken bei unterschiedlicher Flankenlänge (15) aber gleichem Flankenwinkel (16) gebildet wird.

10. Verfahren nach einem der vorhergehenden Ansprüche, dadurch gekennzeichnet, daß die Teilfuge (1) im Flankenbereich der Zahnprofile beim Schneiden eine Breite erhält, die dem Durchmesser a des Erodierdrahtes (5) entspricht, und daß sie in einem parallel zur Trennungsebene verlaufenden Bereich eine Breite erhält, die dem Betrag $b = a + x$ entspricht, wobei b die senkrecht zur Trennungsebene (4) zurückzulegende Strecke beim spaltfreien Zusammenfügen der durch den Erodierdraht getrennten Teile ist.

11. Verfahren nach einem der vorhergehenden Ansprüche, dadurch gekennzeichnet, daß der Erodierdraht (5) während des Trennens in einem vorgegebenen Führungswinkel (19) zur Mittelachse der Baueinheit geführt wird.

12. Verfahren nach Anspruch 1, dadurch gekennzeichnet, daß nach dem Durchtrennen des ersten, vor der Mittelachse liegenden Teils der Baueinheit, der Führungswinkel (19) durch ein Schwenken des Erodierdrahtes (5), vorzugsweise um 180°, für das Trennen des zweiten, auf der anderen Seite der Mittelachse liegenden Teils der Baueinheit verändert wird.

## Claims

1. Method of producing a joint (1) in a turbine component, in particular a diaphragm, which for fitting into a turbine is first of all separated along a, preferably central, separation plane into a top and bottom part (2, 3) and after fitting is complete is assembled again to form a closed construction unit, characterized in that the joint (1) is produced by wire erosion, and the cutting line (6), running in its basic direction along or parallel to the separation plane (4), of an erosion wire (5) specifically moves away from the separation plane (4) at least once and then specifically runs towards the latter again.

2. Method according to Claim 1, characterized in that the cutting line (6) moves rectilinearly away from the separation plane at a predetermined first angle (7) and returns rectilinearly to the separation plane (4) at a predetermined second angle (8).

3. Method according to one of the preceding claims, characterized in that the course of the cutting line (6) corresponds in its profile to a tooth, similar to a saw tooth or a trapezium, and the separation plane (4) forms a centre line through at least one of these teeth.

4. Method according to one of the preceding claims, characterized in that two cutting lines (6) running outside the separation plane (4) away from and towards it in accordance with the sides of a triangle or trapezium enclose a third angle (9) which is bisected by a perpendicular (10) to the separation plane.

5. Method according to one of the preceding claims, characterized in that the tips (11a, 11b) of the teeth formed by the cutting line (6) are rounded off in such a way that resulting convex radii (13) fit in a positive-locking manner into associated concave radii (12) when top and bottom part (2, 3) are joined together.

6. Method according to Claim 5, characterized in that all radii (12, 13) are given a diameter which corresponds to the diameter of the erosion wire (5).

7. Method according to one of the preceding claims, characterized in that work is carried out with an erosion wire (5) which has a diameter of less than 0.5 mm, preferably 0.3 mm.

8. Method according to one of the preceding claims, characterized in that the cutting line (6) is guided in such a way that critical parts (14), in particular nozzle blades, lying in the separation plane (4) are circumvented.

9. Method according to Claim 8, characterized in that, for the cutting line (6) to circumvent the critical parts (14), a tooth profile having rising and falling flanks is formed with a varying flank length (15) but the same flank angle (16).

10. Method according to one of the preceding claims, characterized in that the joint (1) in the flank area of the tooth profiles is given a width during cutting which corresponds to the diameter a of the erosion wire (5), and in that, in an area running parallel to the separation plane, it is given a width which corresponds to the amount $b = a + x$, where b is the distance to be covered perpendicularly to the separation plane (4) when the parts separated by the erosion wire are joined together free of slits.

11. Method according to one of the preceding claims, characterized in that the erosion wire (5) is guided during the separation at a predetermined guide angle (19) to the centre axis of the construction unit.

12. Method according to Claim 1, characterized in that, after the first part of the construction unit lying in front of the centre axis is cut through, the guide angle (19) is changed by swivelling the erosion wire (5), preferably by 180°, for separating the second part of the construction unit lying on the other side of the centre axis.

## Revendications

1. Procédé de fabrication d'un plan de joint (1) dans un élément de turbine, notamment dans une cloison intermédiaire, qui, pour son montage dans une turbine est tout d'abord séparé suivant un plan de séparation - de préférence médian - en deux parties supérieure et inférieure (2, 3) puis, une fois mis en place, est assemblé pour former une unité fermée, caractérisé par le fait que le plan de joint (1) est réalisé par électro-érosion et que la ligne de coupe (6) d'un fil d'étincelage (5), dont la direction de base suit le le plan de séparation (4) ou est parallèle à celui-ci, s'éloigne au moins une fois de manière définie du plan de séparation (4) puis se rapproche de manière définie dudit plan de séparation.

**2.** Procédé selon la revendication 1, caractérisé par le fait que la ligne de coupe (6) s'éloigne de façon rectiligne, suivant un premier angle (7) prédéterminé, du plan de séparation et revient de façon rectiligne, suivant un second angle (8), vers le plan de séparation (4).

**3.** Procédé selon l'une des revendications précédentes, caractérisé par le fait que le tracé de la ligne de coupe (6) correspond en profil à celui d'une dent, est semblable à une dent de scie ou à un trapèze, et que le plan de séparation (4) constitue une médiane qui passe par au moins l'une de ces dents.

**4.** Procédé selon l'une des revendications précédentes, caractérisé par le fait que deux lignes de coupe (6) qui s'éloignent et se rapprochent du plan de séparation (4) à la manière des côtés d'un triangle ou d'un trapèze définissent un troisième angle (9) dont la bissectrice est une perpendiculaire (10) au plan de séparation.

**5.** Procédé selon l'une des revendications précédentes, caractérisé par le fait que les sommets (11a, 11b) des dents formées par la ligne de coupe (6) sont arrondis de telle sorte que, lors de l'assemblage de la partie supérieure avec la partie inférieure (2, 3), les zones arrondies convexes (13) ainsi formées s'engagent par complémentarité de forme dans des zones arrondies (12) concaves correspondantes.

**6.** Procédé selon la revendication 5, caractérisé par le fait que tous les arrondis (12, 13) ont un diamètre qui correspond au diamètre du fil d'étincelage (5).

**7.** Procédé selon l'une des revendications précédentes, caractérisé par le fait que l'on travaille avec un fil d'étincelage (5) dont le diamètre est inférieur à 0,5 mm et, de préférence, est égal à 0,3 mm.

**8.** Procédé selon l'une des revendications précédentes, caractérisé par le fait que le tracé de la ligne de coupe (6) est tel qu'il évite les parties (14) critiques situées dans le plan de séparation, notamment les ailettes de diffuseur.

**9.** Procédé selon la revendication 8, caractérisé par le fait que, pour éviter les parties critiques (14), on génère avec la ligne de coupe (6) un profil de dent avec des flancs ascendants et des flancs descendants, ayant des longueurs (15) de flanc différentes mais des angles (16) de flanc égaux.

**10.** Procédé selon l'une des revendications précédentes, caractérisé par le fait que dans la région du flanc des profils de dents, le plan de joint (1) a, lors de la coupe, une largeur qui correspond au diamètre a du fil d'étincelage (5) et par le fait que dans une région parallèle au plan de séparation la largeur du plan de joint correspond à la valeur b = a + x, b étant la distance à parcourir perpendiculairement au plan de séparation (4) pour l'assemblage sans jeu des éléments séparés au moyen du fil d'étincelage.

**11.** Procédé selon l'une des revendications précédentes, caractérisé par le fait que, pendant l'opération de coupe, le fil d'étincelage (5) est déplacé avec un angle de déplacement (19) prédéterminé par rapport à l'axe médian de l'ensemble.

**12.** Procédé selon la revendication 1, caractérisé par le fait qu'après avoir séparé la première partie de l'ensemble située avant la ligne médiane, on modifie l'angle de déplacement (19) par rotation du fil d'étincelage (5), de préférence de 180°, pour séparer la deuxième partie de l'élément située de l'autre côté de l'axe médian.

Fig.1

Fig.2

# Fig.3